# EUROPÄISCHE PATENTSCHRIFT

(11) **EP 0 368 136 B1**
(45) Veröffentlichungstag und Bekanntmachung des Hinweises auf die Patenterteilung: **10.02.1993**
(21) Anmeldenummer: 89120265.7
(22) Anmeldetag: 02.11.1989
(51) Int. Cl.: C09J 105/14, A24C 5/24

(54) **Verwendung von Gummi arabicum enthaltenden Klebstoffgemischen zur Längsnahtverleimung von Zigarettenhüllen**
Use of adhesive compositions containing gum arabic in the longitudinal glueing of cigarette wrappers
Utilisation de compositions adhésives contenant de la gomme arabique pour le collage longitudinal de gaines de cigarettes

(30) Priorität: 11.11.1988 DE 3838255
(43) Veröffentlichungstag der Anmeldung: 16.05.1990
(73) Patentinhaber: Henkel Kommanditgesellschaft auf Aktien, 40191 Düsseldorf (DE)
(72) Erfinder: Marten, Klaus, Dr., Foster City CA 94404 (US); Hühne, Johannes, D-4000 Düsseldorf 13 (DE); Buxhofer, Horst, D-4006 Erkrath (DE)

(56) Entgegenhaltungen:
- DE-C- 626 010
- FR-A- 408 254
- CHEMICAL ABSTRACTS, Band 96, Nr. 12, 22. März 1982, Seite 106, Zusammenfassung Nr. 87378h, Columbus, Ohio, US; JP-B-81 042 636 (TOPPAN PRINTING CO.)

## Beschreibung

### Verwendung von Gummi arabicum enthaltenden Klebstoffgemischen zur Längsnahtverleimung von Zigarettenhüllen.

Die Erfindung betrifft die Verwendung von Klebstoffgemischen, enthaltend auf 100 Gew.-Teile Wasser
40 bis 120 Gew.-Teile Gummi arabicum,
3 bis 80 Gew.-Teile wasserlösliche Stärkeabbauprodukte und/oder Carboxymethylstärke und/oder verkleisterte Stärke sowie gegebenenfalls übliche Konservierungsmittel in wäßriger Lösung mit einer Viskosität von 1000 bis 15.000, insbesondere 2000 bis 5000 mPas nach Brookfield (RVT) bei 20°C,
zur maschinellen Längsnahtverleimung von Zigarettenhüllen.

Für die maschinelle Längsnahtverleimung von Zigarettenhüllen besteht ein Bedarf an Klebstoffen aus natürlichen Rohstoffen, die die bislang eingesetzten Dispersionsleime ersetzen sollen. So ist in der DE-C 2 619 708 ein Klebstoffgemisch auf Gelatinebasis beschrieben, das jedoch nicht alle Anforderungen, die an einem Klebstoff zur maschinellen Längsnahtverleimung unter Verwendung von in der Zigarettenindustrie üblichen Düsenauftragsystemen zu stellen sind, erfüllt. Die genannten Klebstoffgemische liegen hinsichtlich ihrer Struktur zwischen wäßrigen Systemen und Schmelzklebern und müssen aus beheizten Apparaturen auf die zu verklebenden Papierbereiche aufgetragen werden. Insbesondere beim Erhitzen besteht jedoch, wie bei allen Klebstoffen auf Basis tierischer Proteine, die Gefahr von Zersetzungen unter Entwicklung unangenehmer Gerüche.

Es ist außerdem bekannt, zum Binden von Farben, Papier und Büchern Klebstoffmischungen zu verwenden, bei denen eine Komponente aus Gummi arabicum besteht.

So wird in der DE 626 010 eine Klebstoffmischung aus 10 g Rohkautschuk, 75 g Gummi arabicum, 5 g Natriumsulfat, 50 g Stärke, 50 g Wasserglas in insgesamt 1 200 g Kalkwasser beschrieben (siehe Anspruch). Diese Lösung kann noch mit Wasser verdünnt werden (siehe Zeile 30). Das Klebstoffgemisch wird zum Kleben von Papier, Metall, Glas, Porzellan, Zelluloid, Gewebestoffen, Leder und anderen Werkstoffen, insbesondere zum Gummieren von Briefmarkenbögen, verwendet (siehe Zeilen 20 bis 33).

Aus Chemical Abstracts, Band 96, Jahrgang 1982, Seite 106, Nr. 87378h ist ein Klebstoff zum Binden von Büchern bekannt, der aus Stärke und 0,1 bis 300 % an Dextrin, Gummi arabicum oder Natriumsilikat besteht.

Die französische Patentschrift 408 254 betrifft die Herstellung von Klebstoffpulver. Er besteht zu 50 % aus Gummi arabicum, 5 % Weizenmehl, 2 % Tragant-Gummi, 5 % Dextrin, 15 % Zucker und 3 % Magnesiumsulfat. Das Pulver dient zum Binden von Farben und Büchern sowie zum Fixieren von Glas, Weißblech und Metall.

Demgemäß ist die Erfindung auf die Verwendung von spezielle Klebstoffgemische gerichtet, die eine sichere und dauerhafte Verleimung von Längsnähten von Zigarettenhüllen mit den in der Zigarettenindustrie üblichen Maschinen, insbesondere unter Berücksichtigung der dort erforderlichen hohen Produktionsgeschwindigkeiten, gewährleisten, die nicht zu Zersetzungserscheinungen unter Abgabe unangenehmer Gerüche neigen und die zum Auftragen keine beheizten Apparaturen erfordern.

Diese Aufgabe wird durch die Verwendung der oben genannten Klebstoffgemische auf Basis von Gummi arabicum gelöst.

Die erfindungsgemäß einsetzbaren Gummi arabicum-Sorten sollten von erster Qualität sein, z.B. sogenannte handverlesene Sorten.

Zu den erfindungsgemäß einzusetzenden wasserlöslichen Stärkeabbauprodukten gehören oxidativ oder hydrolytisch abgebaute Stärken und Dextrine (Röstdextrine), insbesondere Weiß- und Gelbdextrine, die z.B. in Ullmanns' Enzyklopädie der Technischen Chemie, 4.Aufl., Band 22, Seiten 191-194, Verlag Chemie Weinheim (1982) beschrieben sind. Allgemein gilt, daß dickkochende Dextrine bevorzugt sind. Typische Vertreter für diese Dextrine sind
a) mittelviskose Dextrine mit einer Viskosität in 60%-iger Lösung von 1000 bis 8000 mPas nach Brookfield (RVT, 20°C), gemessen an einer frisch hergestellten Lösung,
b) hochviskose Dextrine mit einer Viskosität in 50%-iger Lösung von 500 bis 2000 mPas nach Brookfield (RVT, 20°C), gemessen an einer frisch hergestellten Lösung,
c) Weißdextrine mit einer Viskosität in 40%-iger Lösung von 100 bis 1000 mPas nach Brookfield (RVT, 20°C), gemessen an einer frisch hergestellten Lösung.

Die vorgenannten Dextrintypen sind sämtlich im Handel erhältlich.

Als erfindungsgemäß einsetzbare Carboxymethylstärken eignen sich die in der Klebstoffindustrie eingesetzten, handelsüblichen Typen.

Als erfindungsgemäß einzusetzende verkleisterte Stärken eignen sich Kartoffel-, Mais-, Tapioca- und/oder Reisstärke; Maisstärke ist besonders bevorzugt. Vorteilhafterweise werden sie den erfindungsgemäß zu verwendenden Klebstoffen als native Stärken zugesetzt und durch Erhitzen des Klebstoffs verkleistert.

Als Konservierungsmittel eignen sich die in der Klebstoff- und Tabakindustrie üblichen, insbesondere Kaliumsorbat und/oder p-Hydroxybenzoesäureester.

Gemäß einer weiteren vorteilhaften Ausführungsform der Erfindung werden die Klebstoffgemische in üblichen Zigarettenfertigungsmaschinen über Düsen auf die zu verleimenden Längsnahtbereiche der Zigarettenhüllen aufgetragen und ergeben eine wirksame Verleimung. Der Auftrag der Klebstoffgemische erfolgt üblicherweise bei Umgebungstemperatur. Allenfalls bei höherviskosen Klebstoffgemischen kann ein Erwärmen derselben zweckmäßig sein; in diesen Fällen reicht es jedoch aus, wenn nur die Auftragsdüsen beheizt werden.

Die Erfindung wird im folgenden anhand von bevorzugten Ausführungsbeispielen für erfindungsgemäß zu verwendende Klebstoffrezepturen näher erläutert.

Die Herstellung erfolgte in der Weise, daß Stärke und/oder Dextrine, das zerkleinerte Gummi arabicum und das Konservierungsmittel in Wasser gegeben wurden. Das Gemisch wurde unter Rühren auf 90°C erwärmt und 15 min bei dieser Temperatur belassen. Anschließend wurde das Gemisch unter Rühren auf Umgebungstemperatur abgekühlt und durch ein feines Sieb gegossen.

### Beispiel 1.

49,945 Gew.-Teile Wasser,
10,000 Gew.-Teile hochviskoses, gelbes Kartoffeldextrin,
Viskosität in 40%-iger Lösung nach Brookfield (RVT, Spindel 4, 20 Umdrehungen, 20°C, direkt nach der Herstellung) 2300 mPas;
50%-ige Lösung, Spindel 5, 20 Umdrehungen, 20°C, 10.800 mPas,
40,000 Gew.-Teile Gummi arabicum,
0,055 Gew.-Teile Kaliumsorbat.

Das Klebstoffgemisch wies eine Viskosität von 1800 mPas nach Brookfield (RVT, Spindel 4, 20 Umdrehungen, 20°C), einen refraktometrisch bestimmten Feststoffgehalt von ca. 46% sowie einen pH-Wert von 4,4 auf.

### Beispiel 2.

49,945 Gew.-Teile Wasser,
13,000 Gew.-Teile Weißdextrin (schwach abgebaut), Viskosität einer 40%-igen Lösung nach Brookfield (RVT, Spindel 2, 20 Umdrehungen, 20°C) 110 mPas,
37,000 Gew.-Teile Gummi arabicum,
0,055 Gew.-Teile Kaliumsorbat.

Das Produkt wies eine Viskosität von 3500 mPas nach Brookfield (RVT, Spindel 4, 20 Umdrehungen/20°C) von 3500 mPas, einen refraktometisch bestimmten Feststoffgehalt von ca. 46% sowie einen pH-Wert von 4,3 auf.

### Beispiel 3.

49,945 Gew.-Teile Wasser,
10,000 Gew.-Teile native Kartoffelstärke,
40,000 Gew.-Teile Gummi arabicum,
0,055 Gew.-Teile PHB-Ester.

Die Viskosität des Klebstoffgemisches betrug 2800 mPas nach Brookfield (RVT, Spindel 4, 20 Umdrehungen, 20°C), der refraktometrisch bestimmte Feststoffgehalt betrug ca. 45%, der pH-Wert betrug 4,4.

### Beispiel 4.

49,945 Gew.-Teile Wasser,
10,000 Gew.-Teile native Maisstärke,
40,000 Gew.-Teile Gummi arabicum,
0,050 Gew.-Teile Kaliumsorbat.

Die Viskosität des Klebstoffgemisches betrug 2600 mPas nach Brookfield (RVT, Spindel 4, 20 Umdrehungen, 20°C); der refraktometrisch bestimmte Feststoffgehalt betrug ca. 44% und der pH-Wert betrug 4,2.

Die vorstehend genannten Klebstoffgemische wurden in einer handelsüblichen Zigarettenmaschine der Firma Molins, Type Mark 9H, getestet; die Verleimungsdüsen waren übliche Düsen mit beheizbarem Kopf. Es ergab sich eine ausgezeichnete Klebefestigkeit der Längsnähte. Beim gewaltsamen Trennen der Nähte zeigte sich eine Verfilzung der Klebebereiche.

## Patentansprüche

1. Verwendung von Klebstoffgemischen, enthaltend auf
100 Gew.-Teile Wasser
40 bis 120 Gew.-Teile Gummi arabicum,
3 bis 80 Gew.-Teile wasserlösliche Stärkeabbauprodukte und/oder Carboxymethylstärke und/oder verkleisterte Stärke sowie gegebenenfalls übliche Konservierungsmittel in wäßriger Lösung mit einer Viskosität von 1000 bis 15000, insbesondere 1700 bis 5000 mPas nach Brookfield (RVT) bei 20°C, zur maschinellen Längsnahtverleimung von Zigarettenhüllen.

2. Verwendung nach Anspruch 1, dadurch gekennzeichnet, daß die wasserlöslichen Stärkeabbauprodukte aus der von Dextrinen und oxidativ oder enzymatisch abgebauter Stärke gebildeten Gruppe ausgewählt sind.

3. Verwendung nach mindestens einem der Ansprüche 1 oder 2, dadurch gekennzeichnet, daß die wasserlöslichen Stärkeabbauprodukte mittelviskose Dextrine mit einer Viskosität von 1000 bis 8000 mPas, gemessen nach Brookfield (RVT, 20°C) an einer frisch hergestellten 60 %-igen wäßrigen Lösung, sind.

4. Verwendung nach mindestens einem der Ansprüche 1 oder 2, dadurch gekennzeichnet, daß die wasserlöslichen Stärkeabbauprodukte hochviskose Dextrine mit einer Viskosität von 500 bis 2000 mPas, gemessen nach Brookfield (RVT, 20°C) an einer frisch hergestellten 50 %-igen wäßrigen Lösung, sind.

5. Verwendung nach mindestens einem der Ansprüche 1 oder 2, dadurch gekennzeichnet, daß die wasserlöslichen Stärkeabbauprodukte Weißdextrine mit einer Viskosität von 100 bis 1000 mPas, gemessen nach Brookfield (RVT, 20°C) an einer frisch hergestellten 40 %-igen wäßrigen Lösung, sind.

6. Verwendung nach mindestens einem der Ansprüche 1 bis 5, dadurch gekennzeichnet, daß die native Stärke aus der von Kartoffel-, Mais-, Tapioca- und Reisstärke gebildeten Gruppe ausgewählt ist.

7. Verwendung nach mindestens einem der Ansprüche 1 bis 6, dadurch gekennzeichnet, daß das Konservierungsmittel Kaliumsorbat und/oder p-Hydroxybenzoesäureester ist.

8. Verwendung nach mindestens einem der Ansprüche 1 bis 7, dadurch gekennzeichnet, daß die Klebstoffgemische in üblichen Zigarettenfertigungsmaschinen über Düsen auf die zu verleimenden Längsnahtbereiche des Zigarettenhüllen aufgetragen werden.

## Claims

1. The use of adhesive mixtures containing - per 100 parts by weight water - 40 to 120 parts gum arabic, 3 to 80 parts by weight water-soluble starch degradation products and/or carboxymethyl starch and/or gelatinized starch and, optionally, typical preservatives in aqueous solution and having a Brookfield (RVT) viscosity at 20°C in the range from 1,000 to 15,000 and more especially in the range from 1,700 to 5,000 for glueing the longitudinal seam of cigarette tubes by machine.

2. The use claimed in claim 1, characterized in that the water-soluble starch degradation products are selected from the group consisting of dextrins and oxidatively or enzymatically degraded starch.

3. The use claimed in at least one of claims 1 and 2, characterized in that the water-soluble starch degradation products are medium-viscosity dextrins having a Brookfield viscosity (RVT, 20°C) in the range from 1,000 to 8,000 mPa.s, as measured on a freshly prepared 60% aqueous solution.

4. The use claimed in at least one of claims 1 and 2, characterized in that the water-soluble starch degradation products are high-viscosity dextrins having a Brookfield viscosity (RVT, 20°C) in the range from 500 to 2,000 mPa.s, as measured on a freshly prepared 50% by weight aqueous solution.

5. The use claimed in at least one of claims 1 and 2, characterized in that the water-soluble starch degradation products are white dextrins having a Brookfield viscosity (RVT, 20°C) in the range from 100 to 1,000 mPa.s, as measured on a freshly prepared 40% aqueous solution.

6. The use claimed in at least one of claims 1 to 5, characterized in that the native starch is selected from the group consisting of potato, corn, tapioca and rice starch.

7. The use claimed in at least one of claims 1 to 6, characterized in that the preservative is potassium sorbate and/or p-hydroxybenzoic acid ester.

8. The use claimed in at least one of claims 1 to 7, characterized in that the adhesive mixtures are applied to the longitudinal seams of the cigarette tubes to be glued through nozzles in standard cigarette-making machines.

## Revendications

1. Utilisation de compositions d'adhésifs, contenant pour 100 parties en poids d'eau,
de 40 à 120 parties en poids de gomme arabique,
de 3 à 80 parties en poids de produits de dégradation d'amidon solubles dans l'eau et/ou d'amidon carboxyméthylé et/ou d'amidon gélifié, ainsi qu'éventuellement des agents de conservation usuels, en solution aqueuse ayant une viscosité de 1 000 à 15 000, en particulier de 1 700 à 5 000 mPa.s, selon Brookfield (RVT) à 20°C, pour le collage à la machine de joints longitudinaux d'enveloppes de cigarettes.

2. Utilisation selon la revendication 1, caractérisée en ce que les produits de dégradation d'amidon solubles dans l'eau sont choisis parmi des dextrines et de l'amidon dégradé par oxydation ou par voie enzymatique.

3. Utilisation selon au moins une des revendications 1 ou 2, caractérisée en ce que les produits de dégradation d'amidon solubles dans l'eau sont des dextrines moyennement visqueuses ayant une viscosité de 1 000 à 8 000 mPa.s, mesurée selon Brookfield (RVT, 20°C) sur une solution aqueuse à 60 % fraîchement préparée.

4. Utilisation selon au moins une des revendications 1 ou 2, caractérisée en ce que les produits de dégradation d'amidon solubles dans l'eau sont des dextrines très visqueuses ayant une viscosité de 500 à 2 000 mPa.s, mesurée selon Brookfield (RVT, 20°C) sur une solution aqueuse à 50 % fraîchement préparée.

5. Utilisation selon au moins une des revendications 1 ou 2, caractérisée en ce que les produits de dégradation d'amidon solubles dans l'eau sont des dextrines blanches ayant une viscosité de 100 à 1 000 mPa.s, mesurée selon Brookfield (RVT, 20°C) sur une solution aqueuse à 40 % fraîchement préparée.

6. Utilisation selon au moins une des revendications 1 à 5, caractérisée en ce que l'amidon natif est choisi parmi l'amidon de pomme de terre, de maïs, de tapioca et de riz.

7. Utilisation selon au moins une des revendications 1 à 6, caractérisée en ce que l'agent de conservation est le sorbate de potassium et/ou un ester d'acide p-hydroxybenzoïque.

8. Utilisation selon au moins une des revendications 1 à 7, caractérisée en ce que les compositions d'adhésifs sont appliquées sur les zones des joints longitudinaux à coller des enveloppes de cigarettes, par des injecteurs, dans des machines usuelles de fabrication de cigarettes.
